(19) Europäisches Patentamt
European Patent Office
Office européen des brevets

(11) **EP 3 060 886 B1**

(12) **EUROPÄISCHE PATENTSCHRIFT**

(45) Veröffentlichungstag und Bekanntmachung des Hinweises auf die Patenterteilung:
**11.10.2017 Patentblatt 2017/41**

(21) Anmeldenummer: **14757895.9**

(22) Anmeldetag: **22.08.2014**

(51) Int Cl.:
*G01D 1/16* *(2006.01)*     *G01B 21/22* *(2006.01)*
*E05F 15/611* *(2015.01)*

(86) Internationale Anmeldenummer:
**PCT/EP2014/067887**

(87) Internationale Veröffentlichungsnummer:
**WO 2015/058883 (30.04.2015 Gazette 2015/17)**

(54) **VERFAHREN UND VORRICHTUNG ZUM BESTIMMEN EINES DREHWINKELS EINES OBJEKTS UM EINE DREHACHSE**

METHOD AND APPARATUS FOR THE DETERMINATION OF THE ROTATION ANGLE OF AN OBJECT WITH RESPECT TO AN AXIS

MÉTHODE ET APPAREIL POUR DÉTERMINER L'ANGLE DE ROTATION D'UN OBJET AUTOUR D'UN AXE.

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2013 DE 102013221494**

(43) Veröffentlichungstag der Anmeldung:
**31.08.2016 Patentblatt 2016/35**

(73) Patentinhaber: **Robert Bosch GmbH 70442 Stuttgart (DE)**

(72) Erfinder: **SCHEIERMANN, Sergej 70565 Stuttgart (DE)**

(56) Entgegenhaltungen:
**EP-A2- 1 959 127      US-A1- 2008 046 153
US-A1- 2010 135 800      US-B1- 6 873 931**

EP 3 060 886 B1

**Beschreibung**

Die vorliegende Erfindung betrifft ein Verfahren und eine Vorrichtung zum Bestimmen eines Drehwinkels eines Objekts um eine Drehachse.

Stand der Technik

Das Bestimmen eines Drehwinkels eines Objekts erfolgt häufig, indem eine Winkelgeschwindigkeit des Objekts gemessen und integriert wird. Bei dem Drehwinkel kann es sich beispielsweise um einen Öffnungswinkel handeln, das heißt einen Drehwinkel in Bezug auf eine vorbestimmte Objektstellung mit einem vorbestimmten Winkelwert, bei dem das Objekt als "geschlossen" betrachtet wird. Dabei kann es sich beispielsweise um Öffnungswinkel von Fenstern oder Türen handeln.

Solche Anwendungen sind beispielsweise für intelligente Haushalte, sogenannte "smart homes" interessant, mittels welchen ein Benutzer alle relevanten Bereiche und Objekte innerhalb seines Hauses überwachen und/oder kontrollieren kann.

Die Messung der Winkelgeschwindigkeit erfolgt in der Regel mittels eines Drehratensensors (Gyroskop). Eine genauere Bestimmung des Drehwinkels erfordert in der Regel eine permanente Messung der Winkelgeschwindigkeit und stellt hohe Ansprüche an die Stabilität der Winkelgeschwindigkeitsmessung. Insbesondere gibt es hohe Ansprüche an die Stabilität in Bezug auf systematische Messfehler des Drehratensensors und an möglichst geringe Totzeiten nach dem Aufwachen aus einem Stand-by-Betrieb.

In der US 7 349 567 B2 ist ein Verfahren zur Bestimmung eines Drehwinkels eines Objekts beschrieben. Dabei wird ein Musterbild des Objekts in einer bestimmten Stellung bereitgestellt. Es werden, ausgehend von dem Musterbild, Projektionssummen für eine Vielzahl von möglichen Winkelstellungen des Objekts bestimmt. Für ein Bild des Objekts in der zu bestimmenden Winkelstellung werden ebenfalls Projektionssummen berechnet. Es wird diejenige Winkelstellung für das Objekt bestimmt, deren Projektionssumme der Projektionssumme für das Bild des Objekts am nächsten kommt. EP 1 959 127 A2 offenbart ein Verfahren wie im Oberbegriff des Anspruchs 1 definiert.

Offenbarung der Erfindung

Die vorliegende Erfindung offenbart ein Verfahren mit den Merkmalen des Patentanspruchs 1 und eine Vorrichtung mit den Merkmalen des Patentanspruchs 8.

Vorteile der Erfindung

Die der vorliegenden Erfindung zu Grunde liegende Erkenntnis besteht darin, dass die üblicherweise zum Bestimmen von Drehwinkeln von Objekten verwendeten Drehratensensoren verhältnismäßig viel Strom verbrauchen und einen Kostenfaktor darstellen.

Die der vorliegenden Erfindung zu Grunde liegende Idee besteht nun darin, dieser Erkenntnis Rechnung zu tragen und ein Verfahren und eine Vorrichtung zum Bestimmen eines Drehwinkels bereitzustellen, welches besonders stromsparend ist und/oder welches mit besonders wenigen Komponenten durchführbar ist. Insbesondere das Verwenden eines Drehratensensors vermieden werden. Ein gesenkter Stromverbrauch kann zu einer längeren Lebensdauer und damit breiterer Einsetzbarkeit der Vorrichtung führen. Außerdem kann der gesenkte Stromverbrauch es ermöglichen, die Vorrichtung weiter zu verkleinern, da ein Energiespeicher der Vorrichtung kleiner ausfallen kann und/oder seltener ausgetauscht werden muss.

Die zum vollständigen oder weitgehenden Vermeiden von Drehratensensoren nötigen Berechnungen können von einer Recheneinrichtung durchgeführt werden, welche in einem intelligenten Haushalt üblicherweise bereits vorgesehen ist, etwa in Form eines "smart home controllers".

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung umfasst das erfindungsgemäße Verfahren die Schritte: Berechnen eines ersten Tangentialgeschwindigkeitsverlaufs von Tangentialgeschwindigkeiten des Beschleunigungssensors gemäß dem gemessenen ersten Beschleunigungsverlauf; und Berechnen eines ersten Winkelgeschwindigkeitsverlaufs von Winkelgeschwindigkeiten um die Drehachse gemäß dem ersten Tangentialgeschwindigkeitsverlauf und basierend auf dem vorbestimmten Abstand des Beschleunigungssensors von der Drehachse. Das Berechnen des Drehwinkels basiert auf dem berechneten ersten Winkelgeschwindigkeitsverlauf. Der erste Tangentialgeschwindigkeitsverlauf umfasst insbesondere Geschwindigkeiten in tangentialer Richtung bezüglich der Drehachse D. Diese stehen somit senkrecht auf Geschwindigkeiten in axialer und Geschwindigkeiten in radialer Richtung bezüglich der Drehachse D.

Gemäß einer weiteren bevorzugten Weiterbildung umfasst das Verfahren die Schritte: Bestimmen eines Offsets des Beschleunigungssensors; und Kompensieren des bestimmten Offsets des Beschleunigungssensors. Somit können die Messungen, auf welchen das Verfahren beruht, noch genauer werden.

Gemäß einer weiteren bevorzugten Weiterbildung umfasst das Verfahren die Schritte: Messen eines dritten Winkelgeschwindigkeitsverlaufs des Objekts um die Drehachse mittels eines an dem Objekt angebrachten Drehratensensors; und Korrigieren des berechneten ersten Winkelgeschwindigkeitsverlaufs basierend auf dem gemessenen dritten Winkelgeschwindigkeitsverlauf. Das Verfahren kann hierdurch noch genauer werden.

Gemäß einer weiteren bevorzugten Weiterbildung wird das Messen des dritten Winkelgeschwindigkeitsverlaufs seltener durchgeführt als das Messen des ersten Beschleunigungsverlaufs. Das heißt, es erfolgen weniger Messungen pro Zeiteinheit. Der Drehratensensor zum Messen des dritten Winkelgeschwindigkeitsverlaufs kann jeweils aus einem stromsparenden Stand-by-Modus aufgeweckt werden und nach dem Messen des dritten Winkelgeschwindigkeitsverlaufs jeweils wieder in den Stand-by-Modus versetzt werden. Hierdurch ist es möglich, auch dann besonders wenig Strom für das erfindungsgemäße Verfahren zu verbrauchen, wenn ein Drehratensensor verwendet werden soll. Alternativ zum Stand-by-Modus kann der Drehratensensor vor und nach der Messung auch jeweils komplett abgeschaltet sein.

Gemäß einer weiteren bevorzugten Weiterbildung ist das Objekt eine Tür und die Drehachse verläuft durch Angeln der Tür. Alternativ ist das Objekt ein Fenster und die Drehachse verläuft durch Angeln des Fensters. Das Objekt kann auch ein beliebiges anderes Objekt sein, welches um eine Drehachse drehbar ist, etwa eine Luke, eine Hundeklappe, eine Solarzellenanordnung und so weiter.

Gemäß einer weiteren bevorzugten Weiterbildung wird basierend auf dem berechneten Drehwinkel und einem vorbestimmten Drehwinkel-Schwellenwert ermittelt, ob die Tür oder das Fenster offen steht oder geschlossen ist. Abhängig von dem Ergebnis des Ermittelns wird ein OFFEN/GESCHLOSSEN-Signal erzeugt. Der Drehwinkel-Schwellenwert kann beispielsweise einem Drehwinkel $\alpha_0$ bei geschlossener Tür bzw. geschlossenem Fenster entsprechen, beispielsweise 0°. Es kann aber auch eine größere Toleranzschwelle vorgesehen sein, bei der der Drehwinkel-Schwellenwert etwa zwischen 0° und 30°, insbesondere zwischen 0° und 15°, beispielsweise 10° beträgt. Ist der bestimmte Drehwinkel größer als der Drehwinkel-Schwellenwert, wird das Objekt als OFFEN eingestuft, sonst als GESCHLOSSEN. Dieses Signal kann eine Identifikationsinformation des Objekts beinhalten und beispielsweise an einen Benutzer ausgegeben werden oder ein Alarmsignal auslösen.

Gemäß einer bevorzugten Weiterbildung umfasst die erfindungsgemäße Vorrichtung eine Steuereinrichtung und einen Drehratensensor. Der Drehratensensor ist dazu ausgebildet, einen Winkelgeschwindigkeitsverlauf des Objekts um die Drehachse zu messen. Durch die Steuereinrichtung ist der Drehratensensor in einen stromsparenden Stand-by-Modus versetzbar und aus dem Stand-by-Modus wieder aufweckbar.

KURZE BESCHREIBUNG DER ZEICHNUNGEN

Die vorliegende Erfindung wird nachfolgend anhand der in den schematischen Figuren der Zeichnungen dargestellten Ausführungsbeispiele näher erläutert. Es zeigen:

Fig. 1     eine schematische Frontalansicht eines Objekts mit einer daran angebrachten Vorrichtung zum Bestimmen eines Drehwinkels des Objekts um eine Drehachse gemäß einer ersten Ausführungsform der vorliegenden Erfindung;

Fig. 2     einen schematischen Querschnitt durch die Vorrichtung gemäß der ersten Ausführungsform in der x-y-Ebene;

Fig. 3     einen schematischen Längsschnitt durch die Vorrichtung gemäß der ersten Ausführungsform in der x-z-Ebene;

Fig. 4     ein schematisches Blockschaltbild der Vorrichtung;

Fig. 5     ein schematisches Blockbild einer Vorrichtung zum Bestimmen eines Drehwinkels des Objekts um eine Drehachse gemäß der vorliegenden Erfindung;

Fig. 6     ein schematisches Flussdiagramm zum Erläutern eines Verfahrens gemäß einer zweiten Ausführungsform der vorliegenden Erfindung;

Fig. 7     ein schematisches Flussdiagramm zum Erläutern von Verfahrensbestandteilen zum Ermitteln eines Sensor-Offsets gemäß einer dritten Ausführungsform der vorliegenden Erfindung;

Fig. 8     ein schematisches Flussdiagramm zum Erläutern von Verfahrensschritten zum Bestimmen des Abstands des Beschleunigungssensors von der Drehachse gemäß einer weiteren Ausführungsform der vorliegenden Erfindung; und

Fig. 9     ein schematisches Flussdiagramm zum Erläutern eines Verfahrens gemäß einer vierten Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen.

Beschreibung der Ausführungsbeispiele

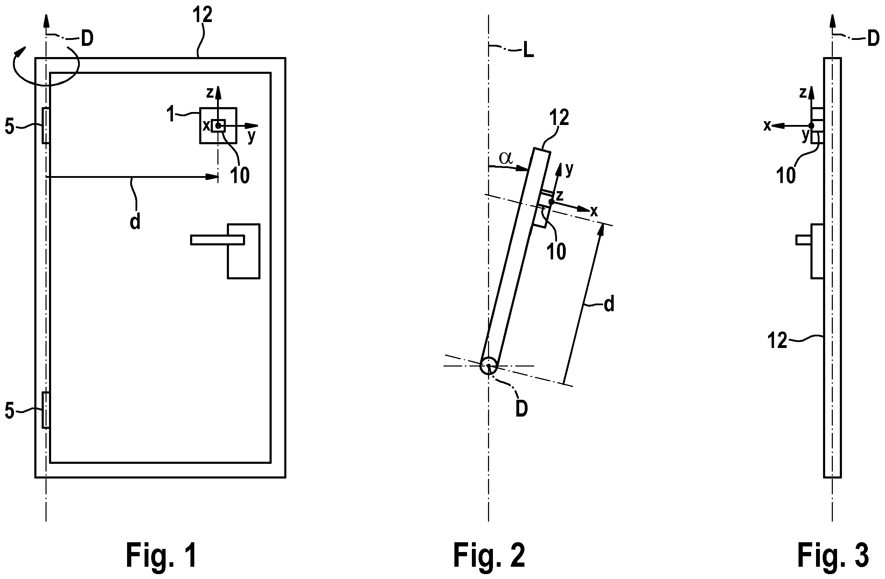

Fig. 1 zeigt eine schematische Frontalansicht eines Objekts mit einer daran angebrachten Vorrichtung zum Bestimmen eines Drehwinkels des Objekts um eine Drehachse gemäß einer ersten Ausführungsform der vorliegenden Erfindung.

Gemäß der nicht maßstabsgetreuen Fig. 1 ist das Objekt 12, dessen Drehwinkel um die Drehachse D bestimmt werden soll, eine Tür. Die erfindungsgemäße Vorrichtung 1 zum Bestimmen des Drehwinkels ist an dem Objekt 12 angebracht. Ein Beschleunigungssensor 10 der Vorrichtung 1 befindet sich in einem radialen Abstand d von der Drehachse D an dem Objekt 12.

Zur Erleichterung der Beschreibung ist in Fig. 1 ein Koordinatensystem dargestellt, welches an dem Beschleunigungssensor 10 seinen Ursprung hat. Eine z-Achse des Koordinatensystems verläuft parallel zu der Drehachse D, welche durch zwei Angeln 5 der Tür verläuft. Eine y-Achse des Koordinatensystems liegt in radialer Richtung von der Drehachse D und zeigt in eine Richtung größerer Entfernung von der Drehachse D. Eine x-Achse des Koordinatensystems steht gemäß der Drei-Finger-Regel senkrecht auf der z-Achse und der y-Achse und weist aus der Zeichenebene hinaus in eine Richtung, in welche sich die Tür 12 öffnen kann. Vorteilhafterweise ist der Abstand d so groß wie möglich. Der Beschleunigungssensor ist zum Messen von Beschleunigungen, insbesondere von linearen Beschleunigungen entlang der x-Achse ausgebildet.

Fig. 2 zeigt einen schematischen Querschnitt durch die Vorrichtung gemäß der ersten Ausführungsform in der x-y-Ebene.

In Fig. 2 ist der Drehwinkel $\alpha$ als Öffnungswinkel der Tür 12 eingezeichnet, das heißt als Auslenkungswinkel der Tür 12 aus einer Ruhelage L. Die Ruhelage L wird mit einem "geschlossenen" Zustand der Tür 12 assoziiert.

Fig. 3 zeigt einen schematischen Längsschnitt durch die Vorrichtung gemäß der ersten Ausführungsform in der x-z-Ebene.

In Fig. 3 ist erkennbar, in Verbindung mit den Figuren 1 und 2, dass der Beschleunigungssensor 10 gemäß der ersten Ausführungsform in einem Gehäuse in Form eines flachen Quaders angeordnet ist.

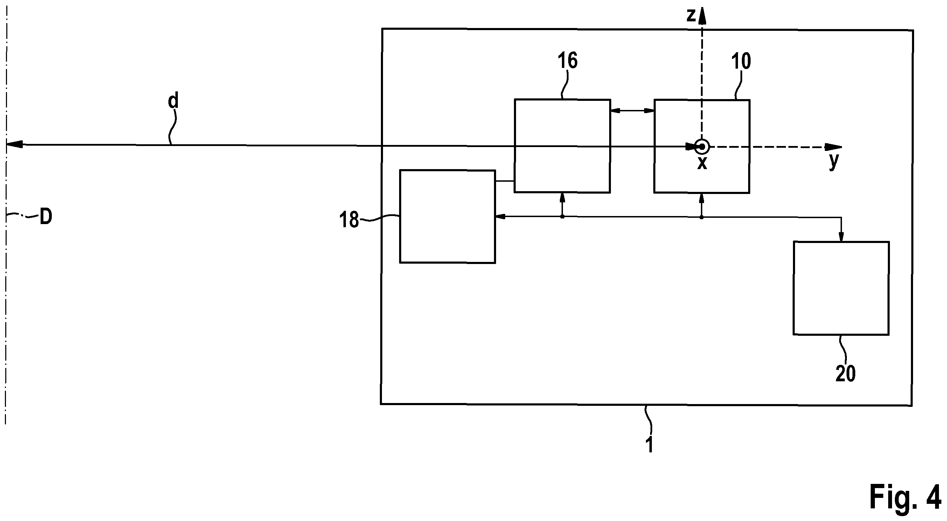

Fig. 4 zeigt ein schematisches Blockschaltbild der Vorrichtung 1. Die Vorrichtung 1 weist eine Steuereinrichtung 16 auf, mittels welcher der Beschleunigungssensor 10 steuerbar ist. Beispielsweise kann die Steuereinrichtung 16 ein Mikrocontroller sein. Die Steuereinrichtung 16 kann dazu ausgebildet sein, den Beschleunigungssensor 10 in einen stromsparenden Stand-by-Modus zu versetzen oder daraus aufzuwecken.

Die Vorrichtung 1 weist weiterhin einen Energiespeicher 20 zum Versorgen der Vorrichtung 1 mit elektrischer Energie auf, welcher beispielsweise eine wiederaufladbare Batterie sein kann. Das Wiederaufladen kann induktiv oder konduktiv, etwa mittels einer an der Vorrichtung ausgebildeten Steckerbuchse, erfolgen. Die Batterie kann aber auch eine nicht-wiederaufladbare Batterie sein.

Die Steuereinrichtung 16 ist mit einer Kommunikationseinrichtung 18 verbunden. Die Kommunikationseinrichtung 18 kann an eine Recheneinrichtung (nicht dargestellt) Daten, insbesondere Messsignale, zumindest übertragen. Die Recheneinrichtung kann Teil eines intelligenten Haushalts sein, beispielsweise ein Smart Home Controller. Die Recheneinrichtung kann auch ein Server sein, über welchen Daten etwa über das Internet abgerufen werden können. Die Recheneinrichtung kann, basierend auf dem von dem Beschleunigungssensor 10 während eines Zeitraums gemessenen Beschleunigungsverlauf und basierend auf dem vorbestimmten Abstand d einen Drehwinkel $\alpha$ (siehe Figur 2) bestimmen.

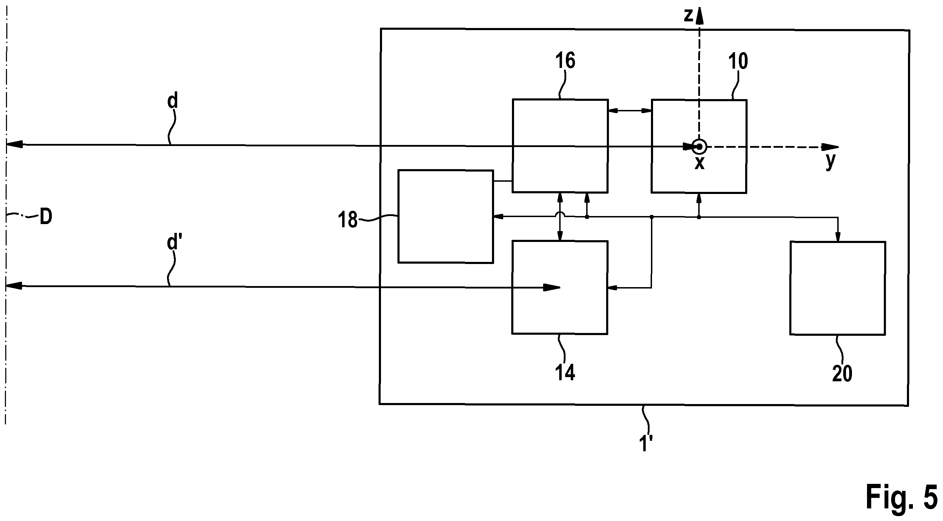

Fig. 5 zeigt ein schematisches Blockbild einer Vorrichtung 1'zum Bestimmen eines Drehwinkels des Objekts um eine Drehachse gemäß der vorliegenden Erfindung.

Die Vorrichtung 1' weist einen Drehratensensor 14 auf, welcher im Abstand d' von der Drehachse D angeordnet ist. Der Abstand d' ist vorteilhafter Weise gleich dem Abstand d, um gewisse Berechnungen zu vereinfachen, wie im Folgenden erläutert. Der Drehratensensor 14 misst Winkelgeschwindigkeiten der Vorrichtung 1', insbesondere um die Drehachse D. Auch der Drehratensensor 14 ist mittels der Steuereinrichtung 16 steuerbar und in einen stromsparenden Stand-by-Modus versetzbar und daraus aufweckbar.

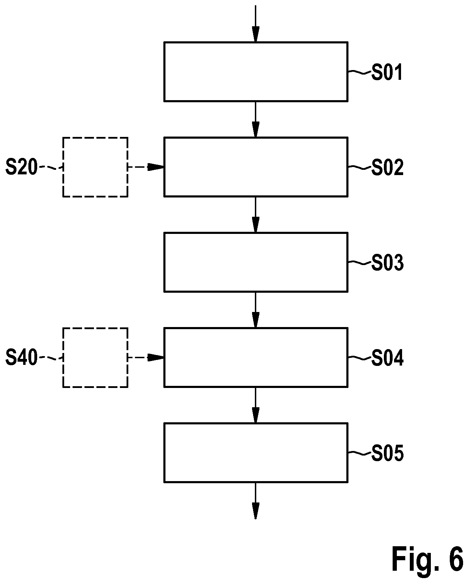

Die Funktionsweise der Vorrichtungen 1; 1' wird im Folgenden in Bezug auf die Figuren 6 bis 9 näher erläutert werden.

Fig. 6 zeigt ein schematisches Flussdiagramm zum Erläutern eines Verfahrens gemäß einer zweiten Ausführungsform der vorliegenden Erfindung.

In einem ersten Schritt S01 wird ein erster Beschleunigungsverlauf des an dem Objekt 12 angebrachten Beschleunigungssensors 10 während eines ersten Zeitraums gemessen.

Der erste Zeitraum kann mit dem Aufwachen des Beschleunigungssensors 12 aus einem Stand-by-Modus beginnen, beispielsweise gesteuert durch die Steuereinrichtung 16 und/oder aufgrund einer gemessenen Bewegung. Durch den Stand-by-Modus kann der Beschleunigungssensor 10 Energie, das heißt elektrischen Strom, sparen. Eine Aufwachzeit des Beschleunigungssensors, das heißt eine Totzeit zwischen einem Signal zum Aufwachen aus dem Stand-by-Modus und ein Zeitpunkt, an welchem das Messen beginnen kann, ist vorteilhafter Weise besonders gering.

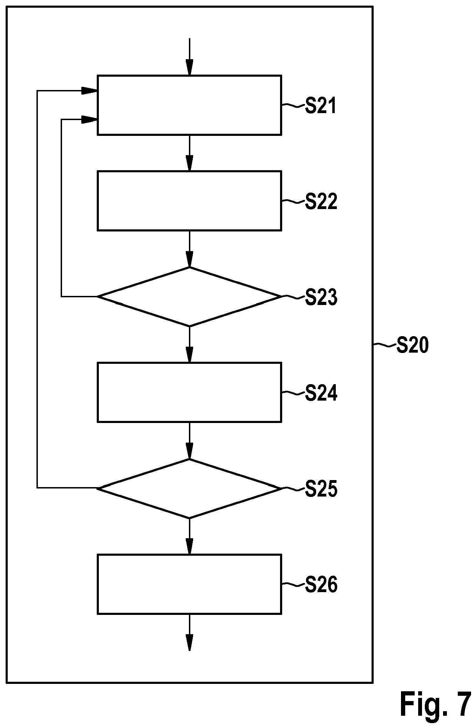

In einem optionalen Verfahrensschritt S02 kann ein Offset, also eine systematische Ungenauigkeit bzw. ein systematischer Messfehler des Beschleunigungssensors 10 kompensiert werden. Dazu kann etwa in mehreren Verfahrensschritten S20 der Offset des Beschleunigungssensors 10, insbesondere ein Offset in x-Richtung, ermittelt werden, wie im Folgenden in Bezug auf Fig. 7 beschrieben. Das Kompensieren S02 kann umfassen, dass der Beschleunigungssensor 10 rekalibriert wird, um bei folgenden Messungen den bestimmten Offset nicht mehr aufzuweisen. In Bezug auf den gemessenen ersten Beschleunigungsverlauf bedeutet das Kompensieren S02 des bestimmten Offsets insbesondere, dass als tatsächliche Beschleunigungen in x-Richtung $a_x(t)$ zu einem Zeitpunkt t nicht die rohen gemessenen ersten Beschleunigungen $a_{x,roh}$ verwendet werden, sondern:

$$a_x(t) = a_{x,roh}(t) - a_{x,offset}.$$

In einem Verfahrensschritt S03 wird ein erster Tangentialgeschwindigkeitsverlauf $v_x$ des Beschleunigungssensors 10 gemäß dem gemessenen ersten Beschleunigungsverlauf berechnet. Insbesondere kann das Berechnen nach der folgenden Formel erfolgen, wobei $T_0$ der Zeitpunkt am Beginn des ersten Zeitraums ist

und $T_1$ ein Zeitpunkt während des ersten Zeitraums ist:

$$v_x(T_1) = v_0 + \int_{T_0}^{T_1} a_x(t) \, dt.$$

$v_x(T_1)$ ist die Tangentialgeschwindigkeit des Beschleunigungssensors 10 in x-Richtung zum Zeitpunkt $T_1$ in Bezug auf die Drehachse D. $v_0$ ist eine konstante Anfangs-Tangentialgeschwindigkeit, welche 0 betragen kann, etwa falls der erste Zeitraum mit dem Bewegen des Objekts 12 aus einem Ruhezustand heraus beginnt.

Die berechnete Tangentialgeschwindigkeit $v_x(T_1)$ ist proportional zu einer ersten Winkelgeschwindigkeit um die Drehachse D des Beschleunigungssensors 10. Der Proportionalitätsfaktor ist hierbei der Abstand d des Beschleunigungssensors 10 zu der Drehachse D.

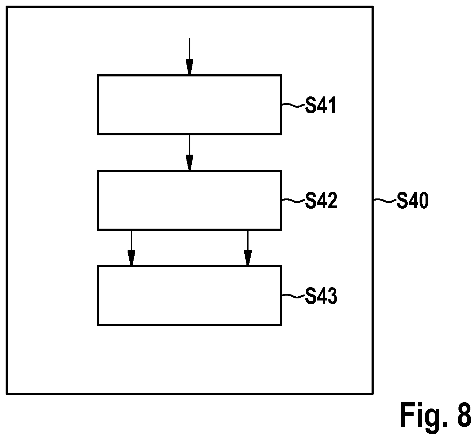

In einem Verfahrensschritt S04 werden ein erster Winkelgeschwindigkeitsverlauf um die Drehachse D gemäß dem ersten Tangentialgeschwindigkeitsverlauf und basierend auf dem vorbestimmten Abstand d des Beschleunigungssensors 10 von der Drehachse D berechnet. Der Abstand d wird wie im Folgenden in Bezug auf Fig. 8 beschrieben, in Verfahrensschritten S40 bestimmt. Alternativ kann der Abstand d auch manuell gemessen und in die Recheneinrichtung programmiert werden, welche das Berechnen S04 des ersten Winkelgeschwindigkeitsverlaufs durchführt. Das Berechnen des ersten Winkelgeschwindigkeitsverlaufs kann mittels der folgenden Formel erfolgen:

$$\omega_D(T_1) = \frac{1}{d} \left( v_0 + \int_{T_0}^{T_1} a_x(t) \, dt \right),$$

das heißt, über die gemessenen ersten Beschleunigungen $a_x$ wird integriert. $\omega_D(T_1)$ ist dabei die Winkelgeschwindigkeit um die Drehachse D zum Zeitpunkt $T_1$.

In einem Verfahrensschritt S05 wird der Drehwinkel $\alpha$, um welchen sich das Objekt 12 während des ersten Zeitraums um die Drehachse D gedreht hat, basierend auf dem berechneten ersten Winkelgeschwindigkeitsverlauf berechnet. Dazu kann die folgende Formel verwendet werden:

$$\alpha(T_{Ende}) = \alpha_0 + \int_{T_0}^{T_{Ende}} \omega_D(T_1) \, dT_1,$$

das heißt, über die berechneten ersten Winkelgeschwindigkeiten wird integriert. Hierbei ist $T_{Ende}$ der Zeitpunkt, an welchem der erste Zeitraum endet und $\alpha_0$ ein konstanter Anfangs-Drehwinkel, welchen das Objekt 12 bezüglich der Ruhelage L eingenommen hat. Der Anfangs-Drehwinkel $\alpha_0$ kann beispielsweise aus einer vorherigen Anwendung des erfindungsgemäßen Verfahrens bekannt sein und/oder in der Recheneinrichtung gespeichert worden sein.

Fig. 7 zeigt ein schematisches Flussdiagramm zum Erläutern von Verfahrensbestandteilen zum Ermitteln eines Offsets eines Sensors 10, 14 gemäß einer dritten Ausführungsform der vorliegenden Erfindung.

Gemäß Fig. 7 wird in einer Reihe von Verfahrensschritten S20 mindestens ein Sensor-Offset ermittelt. Dabei kann es sich um einen Offset des Beschleunigungssensors 10 handeln, es kann sich aber auch um ein Offset des Drehratensensors 14 der Vorrichtung 1' handeln.

In einem Verfahrensschritt S21 werden Messdaten des Sensors 10, 14 aufgenommen. Das heißt, es werden Beschleunigungen bzw. ein Beschleunigungsverlauf durch den Beschleunigungssensor 10 gemessen und/oder es werden Drehraten mittels des Drehratensensors 14 gemessen.

In einem Verfahrensschritt S22 werden die aufgenommenen Daten analysiert, beispielsweise mittels eines an dem Sensor 10, 14 angeschlossenen Mikrocontrollers.

In einem Verfahrensschritt S23 wird, etwa mittels des Mikrocontrollers, basierend auf dem Analysieren S22, überprüft, ob eine Bewegung festgestellt wurde. Wurde eine Bewegung festgestellt, kehrt das Verfahren zum Bestimmen des Sensor-Offsets zum Verfahrensschritt S21 zurück. Wurde allerdings keine Bewegung festgestellt, wird über die gemessenen Sensordaten, das heißt Beschleunigungen und/oder Drehraten bzw. Winkelgeschwindigkeiten, gemittelt.

In einem Verfahrensschritt S25 wird überprüft, ob gemäß vorbestimmten Vorgaben genug Datenpunkte, das heißt Messergebnisse, zur Verfügung stehen, um eine Offset-Schätzung mit einer gewünschten Genauigkeit bereitstellen zu können. Ist dies nicht der Fall, kehrt das System in den Verfahrensschritt S21 zurück. Sind aber genügend Datenpunkte vorhanden, wird in einem Verfahrensschritt S26 der Sensor-Offset geschätzt. Das Schätzen S26 kann auf einer Extrapolation des zeitlichen Verlaufs des berechneten S24 Mittelwerts der Sensordaten basieren. Der bzw. die geschätzten S26 Sensor-Offsets können in dem Verfahrensschritt S02 kompensiert werden.

Das Bestimmen S20 des Offsets des Beschleunigungssensors 10 und/oder des Drehratensensors 14 können einmalig, etwa bei Inbetriebnahme der erfindungsgemäßen Vorrichtung, regelmäßig oder kontinuierlich durchgeführt werden. Beispielsweise können feste Zeiträume vorgegeben werden, innerhalb welcher das in Bezug auf Fig. 6 beschriebene Verfahren regelmäßig durchgeführt wird, so dass auch das Kompensieren S02 des bestimmten Offsets regelmäßig durchgeführt werden kann, wodurch das erfindungsgemäße Verfahren genauer wird.

Fig. 8 zeigt ein schematisches Flussdiagramm zum Erläutern von Verfahrensschritten zum Bestimmen des Abstands des Beschleunigungssensors 10 von der Drehachse D gemäß der vorliegenden Erfindung.

Gemäß der in Bezug auf Fig. 6 beschriebenen Ausführungsform wird der Abstand d des Beschleunigungssensors 10 von der Drehachse D manuell vermessen und somit bereitgestellt. Gemäß der vorliegenden Erfindung wird de Abstand d in mehreren Verfahrensschritten S40 automatisch bestimmt, wie im Folgenden anhand von Fig. 8 erläutert.

In einem Schritt S41 wird ein Beschleunigungsverlauf von Beschleunigungen $a_x$ des Beschleunigungssensors 10 in x-Richtung mittels des Beschleunigungssensors 10 sowie ein Winkelgeschwindigkeitsverlauf von Winkelgeschwindigkeiten $\omega_D^{mess}$ einer Drehung um die Drehachse D mittels des Drehratensensors 14 gemessen.

In einem optionalen Schritt S42 können vorbestimmte Offsets der Sensoren 10, 14 kompensiert werden, beispielsweise wie oben in Bezug auf die Verfahrensschritte S20 beschrieben.

In einem Schritt S43 werden, beispielsweise wie in Bezug auf den Schritt S03 beschrieben, ein Tangentialgeschwindigkeitsverlauf von Tangentialgeschwindigkeiten $v_x$, also Geschwindigkeiten in x-Richtung des Beschleunigungssensors 10 berechnet, etwa durch Integration der Beschleunigungen $a_x$ mittels der Recheneinrichtung. Basierend auf dem gemessenen Winkelgeschwindigkeitsverlauf $\omega_D^{mess}$ und dem berechneten Tangentialgeschwindigkeitsverlauf $v_x$ kann der Abstand d bestimmt werden, beispielsweise Anwenden eines Kalman Filters während der normalen Benutzung des Objekts 12. Der Abstand d kann beispielsweise durch die folgende Formel leicht ermittelt werden:

$$d = \frac{v_x(t)}{\omega_D(t)},$$

wobei t ein beliebiger Zeitpunkt ist. Das Bestimmen des Abstands d kann rekursiv für mehrere Zeitpunkte t mittels eines Kalman Filters erfolgen, wobei sich der berechnete Wert für den Abstand d mit Fortschreiten des Verfahrens immer weiter an den tatsächlichen Wert annähert.

Die Verfahrensschritte S40 können bei einer Kalibrierung und/oder bei Einrichtung der erfindungsgemäßen Vorrichtung an dem Objekt 12 durchgeführt werden. Es kann aber auch vorgesehen sein, dass sie regelmäßig, kontinuierlich, oder auf Anforderung eines Benutzers (erneut) durchgeführt werden.

Die Bestimmung des Abstands d des Beschleunigungssensors 10 von der Drehachse D kann alternativ oder zusätzlich (etwa zur Plausibilisierung) auch dadurch erfolgen, dass der Beschleunigungssensor 10 auch eine Beschleunigung in y-Richtung, als in radialer Richtung bezüglich der Drehachse D misst. Aus den Zentripetalkräften, welche der Beschleunigungssensor 10 erfährt, kann unter Kenntnis des Winkelgeschwindigkeitsverlaufs $\omega_D$ und/oder $\omega_D^{mess}$ der Abstand d errechnet werden.

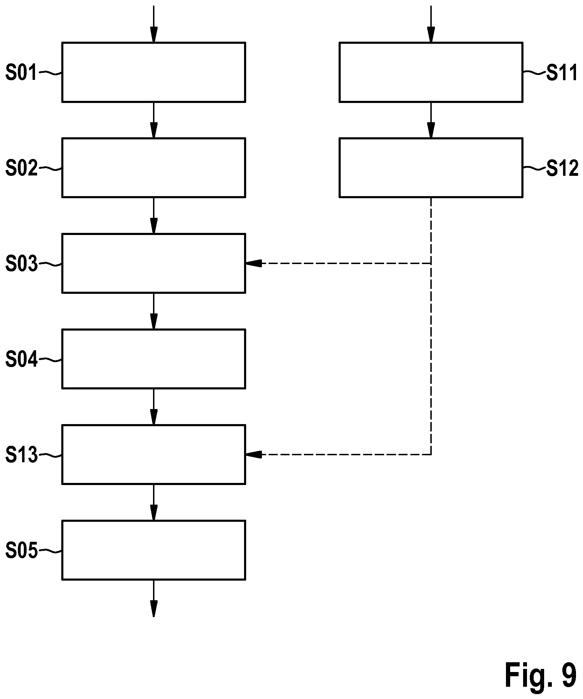

Fig. 9 zeigt ein schematisches Flussdiagramm zum Erläutern eines Verfahrens gemäß einer vierten Ausführungsform der vorliegenden Erfindung.

Die fünfte Ausführungsform ist eine Variante der dritten Ausführungsform, welche sich von der dritten Ausführungsform dadurch unterscheidet, dass zusätzlich ein an dem Objekt 12 ausgebildeter Drehratensensor 14 verwendet wird.

In einem Schritt S11 wird ein Winkelgeschwindigkeitsverlauf $\omega_D^{mess}$ mittels des Drehratensensors 14 gemessen.

In einem optionalen Schritt S12 werden Offsets des Drehratensensors 14 eliminiert, etwa indem die weiter zu verarbeitenden Winkelgeschwindigkeiten $\omega_D^{mess}$ des Winkelgeschwindigkeitsverlaufs die gemessenen Winkelgeschwindigkeiten abzüglich vorbestimmter Drehratensensor-Offsets sind.

Die Schritte S11 und S12 werden vorteilhafter Weise seltener durchgeführt als die restlichen Schritte des Verfahrens gemäß der fünften Ausführungsform. Beispielsweise könnten die restlichen Schritte mit einer Frequenz von 100 Hz erfolgen, während die Schritte S11 und S12 mit einer Frequenz von 1 Hz, also nur ein Hundertstel so häufig, durchgeführt werden. Vorteilhafterweise wird der Drehratensensor, von der Steuereinrichtung 16 gesteuert, nur für das Messen S11 aktiviert bzw. aus einem stromsparenden Stand-by-Modus aufgeweckt und nach dem Messen S11 sofort wieder in den Stand-by-Modus versetzt. Dadurch kann der Stromverbrauch für das Verfahren deutlich reduziert werden.

Nach dem Berechnen S04 des ersten Winkelgeschwindigkeitsverlaufs um die Drehachse D gemäß dem ersten Tangentialgeschwindigkeitsverlauf kann gemäß der dritten Ausführungsform in einem Schritt S13 ein Korrigieren des ersten Winkelgeschwindigkeitsverlaufs stattfinden. Bei dem Korrigieren S13 des Winkelgeschwindigkeitsverlaufs werden die Winkelgeschwindigkeiten $\omega_D$ des berechneten ersten Winkelgeschwindigkeitsverlaufs mit den gemessenen (vorzugsweise nach Offset-Korrektur) Winkelgeschwindigkeiten $\omega_D^{mess}$ verglichen. Weichen die Werte voneinander mehr als innerhalb einer vorbestimmten Toleranz voneinander ab, kann vorgesehen sein, dass für das Berechnen S05 des Drehwinkels statt des berechneten ersten Winkelgeschwindigkeitsverlaufs $\omega_D$ der gemessene Winkelgeschwindigkeitsverlauf $\omega_D^{mess}$ verwendet wird.

Alternativ kann bei dem Korrigieren S13 des ersten Winkelgeschwindigkeitsverlaufs auch ein Mittelwert zwischen den berechneten Winkelgeschwindigkeiten $\omega_D$ des ersten Winkelgeschwindigkeitsverlaufs und den Winkelgeschwindigkeiten des gemessenen (vorzugsweise nach Offset-Korrektur) Winkelgeschwindigkeitsverlaufs $\omega_D^{mess}$ gebildet und im weiteren Verfahren verwendet werden.

Die gemessenen Winkelgeschwindigkeiten $\omega_D^{mess}$ werden weiterhin dazu verwendet, die Kalibrierung des Beschleunigungssensors 10 zu verbessern. Beispielsweise kann die Anfangsgeschwindigkeit $v_0$ des Beschleunigungssensors 10 aus dem gemessenen ersten Winkelgeschwindigkeitsverlaufs $\omega_D^{mess}$ und dem vorbestimmten Abstand d des Beschleunigungssensors 10 von der Drehachse D berechnet werden. Somit kann das Berechnen S03 des ersten Tangentialgeschwindigkeitsverlaufs des Beschleunigungssensors 10 noch präziser werden.

Weitere Unterschiede zwischen den berechneten und den gemessenen Winkelgeschwindigkeitsverläufen können weiterhin dazu verwendet werden, den Beschleunigungssensors 10 regelmäßig zu kalibrieren, das heißt, weitere Offsets zu eliminieren

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann die Recheneinrichtung auch als Teil der Vorrichtung 1; 1' vorgesehen sein. Die Verbindung zwischen der Vorrichtung 1; 1' und der Recheneinrichtung kann drahtgebunden, oder auch über drahtlose Schnittstellen erfolgen, beispielsweise WLAN, WiFi, Bluetooth, ZigBee, Infrarotschnittstellen und ähnliche.

Nach einem automatischen Bestimmen des Abstands des Beschleunigungssensors 10 mittels der Verfahrensschritte S20 kann eine ungünstige Positionierung des Beschleunigungssensors 10 - etwa ein zu geringer Abstand von der Drehachse D - angezeigt werden. Das Anzeigen kann beispielsweise an einem Display der Recheneinrichtung erfolgen. Es können aber auch durch die Vorrichtung 1; 1' mittels einer Tonerzeugungseinrichtung Piepstöne erzeugt werden, welche das optimale Platzieren des Beschleunigungssensors vereinfachen oder zumindest eine ungünstige Positionierung anzeigen.

**Patentansprüche**

1. Verfahren zum Bestimmen eines Drehwinkels eines Objekts um eine Drehachse mit den Schritten:

 • Messen (S01) eines ersten Beschleunigungsverlaufs eines an dem Objekt (12) angebrachten Beschleunigungssensors (10) während eines ersten Zeitraums; und
 • Berechnen (S05) des Drehwinkels ($\alpha$), um welchen sich das Objekt (12) während des ersten Zeitraums um die Drehachse (D) gedreht hat, basierend auf dem ersten Beschleunigungsverlauf während des ersten Zeitraums und basierend auf einem vorbestimmten Abstand (d) des Beschleunigungssensors (10) von der Drehachse (D), wobei der Abstand (d) des Beschleunigungssensors (10) von der Drehachse (D) unter Verwendung der folgenden Schritte bestimmt wird:

 ▪ Messen (S41) eines zweiten Beschleunigungsverlaufs des Beschleunigungssensors (10) während eines zweiten Zeitraums;
 ▪ Messen (S41) eines zweiten Winkelgeschwindigkeitsverlaufs mittels eines an dem Objekt (12) angebrachten Drehratensensors (14) während des zweiten Zeitraums;
 ▪ Berechnen eines zweiten Tangentialgeschwindigkeitsverlaufs des Beschleunigungssensors (10) gemäß der gemessenen zweiten Beschleunigung; und
 ▪ Berechnen (S43) des Abstands (d) des Beschleunigungssensors (10) von der Drehachse (D) basierend auf dem berechneten zweiten Tangentialgeschwindigkeitsverlauf und dem gemessenen zweiten Winkelgeschwindigkeitsverlauf.

2. Verfahren nach Anspruch 1 mit den Schritten:

 • Berechnen (S03) eines ersten Tangentialgeschwindigkeitsverlaufs des Beschleunigungssensors (10) gemäß dem gemessenen ersten Beschleunigungsverlauf; und
 • Berechnen (S04) eines ersten Winkelgeschwindigkeitsverlaufs um die Drehachse (D) gemäß dem ersten Tangentialgeschwindigkeitsverlauf und basierend auf dem vorbestimmten Abstand (d) des Beschleunigungssensors (10) von der Drehachse (D);
 wobei das Berechnen (S05) des Drehwinkels ($\alpha$) auf dem berechneten ersten Winkelgeschwindigkeitsverlauf basiert.

3. Verfahren nach einem der vorangehenden Ansprüche 1 oder 2 mit den Schritten:

 • Bestimmen (S20) eines Offsets des Beschleunigungssensors (10); und
 • Kompensieren (S02) des bestimmten Offsets des Beschleunigungssensors (10).

4. Verfahren nach einem der vorangehenden Ansprüche 1 bis 3 mit den Schritten:

 • Messen (S11) eines dritten Winkelgeschwindigkeitsverlaufs des Objekts (12) um die Drehachse (D) mittels eines an dem Objekt (12) angebrachten Drehratensensors (14); und
 • Korrigieren (S13) des berechneten (S04) ersten Winkelgeschwindigkeitsverlaufs basierend auf dem gemessenen dritten Winkelgeschwindigkeitsverlauf.

5. Verfahren nach Anspruch 4, wobei das Messen (S11) des dritten Winkelgeschwindigkeitsverlaufs seltener durchgeführt wird als das Messen (S01) des ersten Beschleunigungsverlaufs und wobei der Drehratensensor (14) zum Messen (S11) des dritten Winkelgeschwindigkeitsverlaufs jeweils aus einem stromsparenden Stand-by-Modus aufgeweckt wird und nach dem Messen (S11) des dritten Winkelgeschwindigkeitsverlaufs jeweils wieder in den Stand-by-Modus versetzt wird.

6. Verfahren nach einem der vorangehenden Ansprüche 1 bis 5, wobei das Objekt (12) eine Tür ist und die Drehachse durch Angeln (5) der Tür verläuft oder wobei das Objekt (12) ein Fenster ist und die Drehachse durch Angeln des Fensters verläuft.

7. Verfahren nach Anspruch 6, wobei weiterhin basierend auf dem berechneten Drehwinkel ($\alpha$) und einem vorbestimmten Drehwinkel-Schwellenwert ermittelt wird, ob die Tür oder das Fenster offen steht oder geschlossen ist und abhängig von dem Ergebnis des Ermittelns ein OFFEN/GESCHLOSSEN-Signal erzeugt wird.

8. Vorrichtung zum Bestimmen eines Drehwinkels eines Objekts um eine Drehachse mit:

einem an dem Objekt (12) anbringbaren Beschleunigungssensor (10); und einer Recheneinrichtung, welche dazu ausgebildet ist, basierend auf einem von dem Beschleunigungssensor (10) während eines Zeitraums gemessenen Beschleunigungsverlauf und basierend auf einem vorbestimmten Abstand (d) des Beschleunigungssensors (10) von der Drehachse (D) den Drehwinkel ($\alpha$) zu bestimmen, wobei die Recheneinrichtung dazu ausgebildet ist, den Abstand (d) des Beschleunigungssensors (10) von der Drehachse (D) zu bestimmen, indem die Recheneinrichtung dazu eingerichtet ist, einen zweiten Beschleunigungsverlauf des Beschleunigungssensors (10) während eines zweiten Zeitraums zu messen, einen zweiten Winkelgeschwindigkeitsverlaufs mittels eines an dem Objekt (12) angebrachten Drehratensensors (14) während des zweiten Zeitraums zu messen, einen zweiten Tangentialgeschwindigkeitsverlaufs des Beschleunigungssensors (10) gemäß der gemessenen zweiten Beschleunigung zu berechnen und den Abstands (d) des Beschleunigungssensors (10) von der Drehachse (D) basierend auf dem berechneten zweiten Tangentialgeschwindigkeitsverlauf und dem gemessenen zweiten Winkelgeschwindigkeitsverlauf zu berechnen.

9. Vorrichtung nach Anspruch 8 mit:

einer Steuereinrichtung (16); und einem Drehratensensor (14), welcher dazu ausgebildet ist, einen Winkelgeschwindigkeitsverlauf des Objekts (12) um die Drehachse (D) zu messen und welcher durch die Steuereinrichtung (16) in einen stromsparenden Stand-by-Modus versetzbar und aus dem Stand-by-Modus wieder aufweckbar ist

**Claims**

1. Method for determining a rotation angle of an object about an axis of rotation, having the steps of:

• measuring (S01) a first acceleration profile of an acceleration sensor (10) fitted to the object (12) during a first period; and • calculating (S05) the rotation angle ($\alpha$) through which the object (12) has rotated about the axis of rotation (D) during the first period on the basis of the first acceleration profile during the first period and on the basis of a predetermined distance (d) between the acceleration sensor (10) and the axis of rotation (D), the distance (d) between the acceleration sensor (10) and the axis of rotation (D) being determined using the following steps:

■ measuring (S41) a second acceleration profile of the acceleration sensor (10) during a second period; ■ measuring (S41) a second angular velocity profile by means of a rate-of-rotation sensor (14) fitted to the object (12) during the second period; ■ calculating a second tangential velocity profile of the acceleration sensor (10) according to the measured second acceleration; and ■ calculating (S43) the distance (d) between the acceleration sensor (10) and the axis of rotation (D) on the basis of the calculated second tangential velocity profile and the measured second angular velocity profile.

2. Method according to Claim 1, having the steps of:

• calculating (S03) a first tangential velocity profile of the acceleration sensor (10) according to the measured first acceleration profile; and • calculating (S04) a first angular velocity profile about the axis of rotation (D) according to the first tangential velocity profile and on the basis of the predetermined distance (d) between the acceleration sensor (10) and the axis of rotation (D); the calculation (S05) of the rotation angle ($\alpha$) being based on the calculated first angular velocity profile.

3. Method according to either of the preceding Claims 1 and 2, having the steps of:

    • determining (S20) an offset of the acceleration sensor (10); and
    • compensating (S02) for the determined offset of the acceleration sensor (10).

4. Method according to one of the preceding Claims 1 to 3, having the steps of:

    • measuring (S11) a third angular velocity profile of the object (12) about the axis of rotation (D) by means of a rate-of-rotation sensor (14) fitted to the object (12); and
    • correcting (S13) the calculated (S04) first angular velocity profile on the basis of the measured third angular velocity profile.

5. Method according to Claim 4, the measurement (S11) of the third angular velocity profile being carried out more rarely than the measurement (S01) of the first acceleration profile, and the rate-of-rotation sensor (14) respectively being woken up from a power-saving standby mode in order to measure (S11) the third angular velocity profile and respectively being changed to the standby mode again after measuring (S11) the third angular velocity profile.

6. Method according to one of the preceding Claims 1 to 5, the object (12) being a door and the axis of rotation running through hinges (5) of the door, or the object (12) being a window and the axis of rotation running through hinges of the window.

7. Method according to Claim 6, wherein it is also determined, on the basis of the calculated rotation angle (α) and a predetermined rotation angle threshold value, whether the door or the window is open or closed, and an OPEN/CLOSED signal is generated on the basis of the result of the determination.

8. Apparatus for determining a rotation angle of an object about an axis of rotation, having:

    an acceleration sensor (10) which can be fitted to the object (12); and
    a computing device which is designed to determine the rotation angle (α) on the basis of an acceleration profile measured by the acceleration sensor (10) during a period and on the basis of a predetermined distance (d) between the acceleration sensor (10) and the axis of rotation (D), the computing device being designed to determine the distance (d) between the acceleration sensor (10) and the axis of rotation (D) by virtue of the computing device being set up to measure a second acceleration profile of the acceleration sensor (10) during a second period, to measure a second angular velocity profile by means of a rate-of-rotation sensor (14) fitted to the object (12) during the second period, to calculate a second tangential velocity profile of the acceleration sensor (10) according to the measured second acceleration and to calculate the distance (d) between the acceleration sensor (10) and the axis of rotation (D) on the basis of the calculated second tangential velocity profile and the measured second angular velocity profile.

9. Apparatus according to Claim 8, having:

    a control device (16); and
    a rate-of-rotation sensor (14) which is designed to measure an angular velocity profile of the object (12) about the axis of rotation (D) and which can be changed to a power-saving standby mode and can be woken from the standby mode again by the control device (16).

**Revendications**

1. Procédé pour déterminer un angle de rotation d'un objet autour d'un axe de rotation, comprenant les étapes suivantes :

    * mesure (S01) d'une première courbe d'accélération d'un capteur d'accélération (10) monté sur l'objet (12) pendant une première période ; et
    * calcul (S05) de l'angle de rotation (α) duquel l'objet (12) a tourné autour de l'axe de rotation (D) pendant la première période en se basant sur la première courbe d'accélération pendant la première période et en se basant sur un écart prédéfini (d) entre le capteur d'accélération (10) et l'axe de rotation (D), l'écart (d) entre le capteur d'accélération (10) et l'axe de rotation (D) étant déterminé en exécutant les étapes suivantes :

        * mesure (S41) d'une deuxième courbe d'accélération du capteur d'accélération (10) pendant une deuxième période ;
        * mesure (S41) d'une deuxième courbe de vitesse angulaire au moyen d'un capteur de vitesse de rotation (14) monté sur l'objet (12) pendant la deuxième période ;
        * calcul d'une deuxième courbe de vitesse tangentielle du capteur d'accélération (10) conformément à la deuxième accélération mesurée ; et

* calcul (S43) de l'écart (d) entre le capteur d'accélération (10) et l'axe de rotation (D) en se basant sur la deuxième courbe de vitesse tangentielle calculée et la deuxième courbe de vitesse angulaire mesurée.

**2.** Procédé selon la revendication 1, comprenant les étapes suivantes :

* calcul (S03) d'une première courbe de vitesse tangentielle du capteur d'accélération (10) conformément à la première courbe d'accélération mesurée ; et
* calcul (S04) d'une première courbe de vitesse angulaire autour de l'axe de rotation (D) conformément à la première courbe de vitesse tangentielle et en se basant sur l'écart prédéfini (d) entre le capteur d'accélération (10) et l'axe de rotation (D) ;
le calcul (S05) de l'angle de rotation (α) se basant sur la première courbe de vitesse angulaire calculée.

**3.** Procédé selon l'une des revendications précédentes 1 ou 2, comprenant les étapes suivantes :

* détermination (S20) d'un décalage du capteur d'accélération (10) ; et
* compensation (S02) du décalage déterminé du capteur d'accélération (10).

**4.** Procédé selon l'une des revendications précédentes 1 à 3, comprenant les étapes suivantes :

* mesure (S11) d'une troisième courbe de vitesse angulaire de l'objet (12) autour de l'axe de rotation (D) au moyen d'un capteur de vitesse de rotation (14) monté sur l'objet (12) ; et
* correction (S13) de la première courbe de vitesse angulaire calculée (S04) en se basant sur la troisième courbe de vitesse angulaire mesurée.

**5.** Procédé selon la revendication 4, la mesure (S11) de la troisième courbe de vitesse angulaire étant réalisée plus rarement que la mesure (S01) de la première courbe d'accélération et le capteur de vitesse de rotation (14) destiné à mesurer (S11) la troisième courbe de vitesse angulaire étant respectivement activé depuis un mode de veille à faible consommation d'électricité et de nouveau mis en mode de veille après la mesure (S11) de la troisième courbe de vitesse angulaire.

**6.** Procédé selon l'une des revendications précédentes 1 à 5, l'objet (12) étant une porte et l'axe de rotation s'étendant à travers les gonds (5) de la porte, ou l'objet (12) étant une fenêtre et l'axe de rotation s'étendant à travers les gonds de la fenêtre.

**7.** Procédé selon la revendication 6, l'angle de rotation (α) calculé et une valeur de seuil d'angle de rotation prédéfinie servant de base pour déterminer en outre si la porte ou la fenêtre est ouverte ou fermée et, suivant le résultat de la détermination, un signal OUVERT/FERMÉ étant généré.

**8.** Dispositif pour déterminer un angle de rotation d'un objet autour d'un axe de rotation, comprenant :

un capteur d'accélération (10) monté sur l'objet (12) ; et
une unité de calcul qui est configurée pour, en se basant sur une courbe d'accélération mesurée par le capteur d'accélération (10) pendant une période et en se basant sur un écart prédéfini (d) entre le capteur d'accélération (10) et l'axe de rotation (D), déterminer l'angle de rotation (α), l'unité de calcul étant configurée pour déterminer l'écart (d) entre le capteur d'accélération (10) et l'axe de rotation (D) en ce que l'unité de calcul est conçue pour mesurer une deuxième courbe d'accélération du capteur d'accélération (10) pendant une deuxième période, mesurer une deuxième courbe de vitesse angulaire au moyen d'un capteur de vitesse de rotation (14) monté sur l'objet (12) pendant la deuxième période, calculer une deuxième courbe de vitesse tangentielle du capteur d'accélération (10) conformément à la deuxième accélération mesurée et calculer l'écart (d) entre le capteur d'accélération (10) et l'axe de rotation (D) en se basant sur la deuxième courbe de vitesse tangentielle calculée et la deuxième courbe de vitesse angulaire mesurée.

**9.** Dispositif selon la revendication 8, comprenant :

un dispositif de commande (16) ; et
un capteur de vitesse de rotation (14) qui est conçu pour mesurer une courge de vitesse angulaire de l'objet (12) autour de l'axe de rotation (D) et qui peut être amené par le dispositif de commande (16) dans un mode de veille à faible consommation d'électricité et de nouveau activé depuis le mode de veille.

Fig. 3

Fig. 2

Fig. 1

Fig. 4

Fig. 5

Fig. 6

Fig. 7

Fig. 8

S01

S11

S02

S12

S03

S04

S13

S05

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7349567 B2
- EP 1959127 A2